Europäisches Patentamt

European Patent Office

Office européen des brevets

(19)

(11) EP 1 499 147 A1

(12) EUROPEAN PATENT APPLICATION

(43) Date of publication:
19.01.2005 Bulletin 2005/03

(51) Int Cl.7: H04Q 7/38

(21) Application number: 03291779.1

(22) Date of filing: 17.07.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicants:
• Mitsubishi Electric Information Technology
Centre Europe B.V.
35700 Rennes (FR)

• MITSUBISHI DENKI KABUSHIKI KAISHA
Tokyo 100-8310 (JP)

(72) Inventor: Jechoux, Bruno
35200 Rennes (FR)

(74) Representative: Blot, Philippe Robert Emile et al
Cabinet Lavoix
2, place d'Estienne d'Orves
75441 Paris Cedex 09 (FR)

(54) Traffic dependant soft handover in a UMTS system

(57) The invention concerns a process for managing the soft handover in a cellular wireless telecommunication system is in which each cell has a base station for communicating with mobile stations which are within the associated cell, and mobile stations which are in soft handover regions of adjacent cells, the soft handover region being defined for each cell with respect to an adjacent cell by a soft handover window value dedicated to the cell, a mobile station in a current cell being in the soft handover region of this cell and connected to the base station of an adjacent cell if the difference between at least a measurement performed on a beacon signal received from the base station of the current cell and at least a measurement performed on a beacon signal received from the base station of the adjacent cell is lower than the soft handover window value. The process includes a step of setting the soft handover window value of each cell depending on a feature of the cell so that the soft handover window values of the cells are different.

FIG.4

EP 1 499 147 A1

**Description**

The present invention concerns a process for managing the soft handover in a cellular wireless telecommunication system is in which each cell has a base station for communicating with mobile stations which are within the associated cell, and mobile stations which are in soft handover regions of adjacent cells, the soft handover region being defined for each cell with respect to an adjacent cell by a soft handover window value dedicated to the cell, a mobile station in a current cell being in the soft handover region of this cell and connected to the base station of an adjacent cell if the difference between at least a measurement performed on a beacon signal received from the base station of the current cell and at least a measurement performed on a beacon signal received from the base station of the adjacent cell is lower than the soft handover window value.

The cellular wireless telecommunication systems have limited resources for each cell. It is a common objective to maximize the downlink throughput locally available in a hot spot, that is to say the spot which needs a lot of resources.

In a cellular network, the mobility management is achieved by the handover control provided by the Radio Resource Management (RRM). The Radio Resource Management (RRM) algorithms are proprietary algorithms which use the standardized measurement, signaling and parameters of the system to manage the radio interface functioning.

These RRM algorithms are located at the network side, generally in the Radio Network Controller (RNC). The Handover Control is in charge of connecting the mobile stations (UE) to a cell or to a set of cells, hence implicitly determining the resource needs in each cell.

In UMTS (FDD), a particular type of handover which is called soft handover is applied. With soft handover, a mobile station can be connected to several cells at the same time. It brings some diversity gain and allows a smoother and progressive handover. The different cells communicating with a mobile station at a certain time are listed in the Active Set of the mobile station.

The active set contains the radio links simultaneously used between a mobile station and the Umts Terrestrial Radio Access Radio Access Network (UTRAN). The active set contains the list of the linked cells.

The extend of each cell is defined according to the received Ec/No(ratio between the energy per chip and the spectral noise power density) or to the measured path loss of Current Pilot Channel (CPICH) sent by the base stations of the neighbouring cells.

In particular, a mobile station is in the cell, the received Ec/No of the CPICH of which is the strongest (or the path loss of which is the smallest).

For achieving the soft handover, a parameter denoted REPOR-TING_RANGE has been defined for the UMTS in 3GPP TS 25.331 v5.2.0 (2002-09) Radio Resource Control Protocol Specification.

The reporting range can be defined as follows :

$$REPORTING\_RANGE = BEST\ RECEIVED\_CPICH -$$

$$SHO\_WINDOW\ (dB),$$

where : BEST RECEIVED_CPICH is either the highest received Ec/No or the lowest path loss of the CPICH corresponding to the cell containing the mobile station ; and

SHO_WINDOW is a parameter defined for each cell and defining the extend of a soft handover region of the cell.

The reporting range is defined with reference to the CPICH presenting either the highest received Ec/No or the lowest path loss.

In order to maximize the downlink throughput, several solutions have been proposed to optimize the condition in each cell of the network separately.

Nevertheless, the partition of the full network capacity is not optimized.

The aim of the invention is to propose a complementary solution which optimizes the downlink throughput locally available in the hot spots of the network.

Accordingly, the subject-matter of the invention is a method as defined in claim 1.

According to particular embodiments, the method comprises the features of one or more sub-claims.

The invention will be better understood on reading the description which follows, given merely by way of example and while referring to the drawings in which :

- figure 1 A is a schematical view of a cellular network in which all cells are normaly loaded ;
- figure 1 B is a schematical view of two adjacent cells explaining the definition of the soft handover region ;
- figure 1 C is a schematical view of a cellular network in which the cells have different loads, and different soft handover windows according to the invention ;
- figure 2 is a flow chart of the algorithm for shaping the soft handover regions, according to the invention ;

- figure 3 is a curve showing the received power of CPICHs versus time for a mobile station without implementation of the invention ; and
- figure 4 is a curve showing the received power of CPICHs versus time for a mobile station when the invention is implemented.

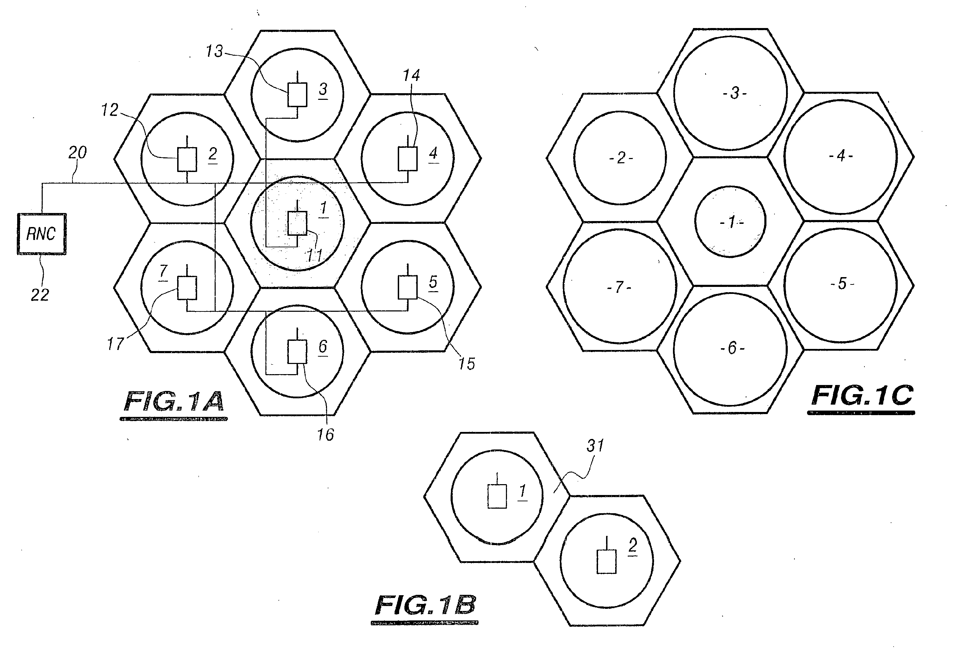

A part of a cellular network is shown on figures 1 A, 1 B and 1 C.

The cellular network is assumed to be according to UMTS (Universal Mobile Telecommunications Systems) standard as defined by 3GPP.

According to usual representation, each cell is shown as an hexagon. On the figures, only seven cells denoted 1, 2, 3, 4, 5, 6, 7 are shown.

Each cell comprises a base station denoted 11, 12, 13, 14, 15, 16, 17, respectively. Each base station is adapted to communicate with the mobile stations which are in the cell containing the base station and with the mobile stations which are in the soft handover regions of other cells (adjacent or not) as will disclosed hereafter.

The base stations are linked together through a physical network 20.

A Radio Network Controller 22 (RNC) is connected to the base stations through the network 20. The Radio Network Controller is in charge of the Radio Resource Management (RRM) algorithm. In particular, it is adapted to implement the algorithm managing the soft handover between the cells and more generally to control the UTRAN.

Each base station broadcasts information on a current pilot channel (CPICH) transmitting beacon signals.

The boundary between two adjacent cells is the area where a mobile station receives the CPICHs broadcasted by the two base stations with a same predetermined measurement performed on the beacon signal. In the following description, the measured quantity is, for example Ec/No. Alternatively, the path loss is the selected measurement. In the following, the definitions are given for Ec/No. Parallel definitions are given for path loss between brackets. The boundary between cells i and j is the area where

$$\text{Ec/No CPiCH}_i = \text{Ec/No CPiCH}_j \ [\text{Path Loss CPiCH}_i = \text{Path Loss CPiCH}_j]$$

where $\text{Ec/No CPICH}_k$ is the ratio between the energy per chip and the spectral noise power density received by a mobile station on $\text{CPICH}_k$ broadcasted by the base station of cell k.

The soft handover region is defined by the soft handover window denoted SHO_WINDOW which is a parameter attached to each cell. This parameter is defined by the Radio Network Controller (RNC) (in fact it is the aggregation of several parameters) and sent to each mobile station of a cell through the associated base station.

It is assumed that a mobile station 31 is in cell 1, as shown on figure 1B, which means that Ec/No CPICH1 > Ec/No CPICH2 [Path loss CPICH1 < Path loss CPICH2].

Mobile station 31 is in the show window region of cell 1 if

REPORTING-RANGE 1 < Ec/No CPICH2,

i.e. Ec/No CPICH1 - SHO_WINDOW 1 < Ec/No CPICH2.

In other words, the power received from the base station 12 of the adjacent cell 2 is higher than the power received from the base station 11 of the current cell 1 reduced by the soft handover window.

On figures 1A, 1 B and 1 C, the soft handover region is delimited by the circle and the hexagonal edge of the cell. These drawings, presented as an example, feature obviously a case where there is no shadowing, otherwise the internal edge of the soft handover region would not be circular.

The main idea of the invention is to dissociate the soft handover window (SHO_WINDOW) of the different cells, while it is commonly set identical through all the network.

In particular, the idea is to link the value of the soft handover window to the cell load level.

As an example, the algorithm can be based on the observation of the number of un-served mobile stations for each cell. In another example, it could be based on the observation of the power transmitted by the base station.

More precisely, when a cell is overloaded (i.e. it has more than a certain ratio of rejected calls or of un-served mobile stations because it did not have enough power to satisfy all the services) and one of its neighbours at least is under loaded (it has less than a certain ratio of blocked service or of un-served mobile station), the soft handover window (the allowed power difference between the preferred link and the worst one within the active set) is increased in the cell in order to force a higher number of mobile stations to switch in soft handover mode then sharing the load with the neighbouring cells. On the opposite, if a cell is under loaded while one of its neighbours at least is overloaded, its soft handover window is decreased in order to reduce the useless soft handover overload on the neighbours.

On the example shown on figure 1C, cell number 1 is assumed to become overloaded while the surrounding cells 3, 4, 5, 6 and 7 are assumed to become under loaded. By applying the method according to the invention, the soft handover window of cell 1 is increased while it is decreased in cells 3-7. Cell 2 which was normally loaded keeps the same soft handover window.

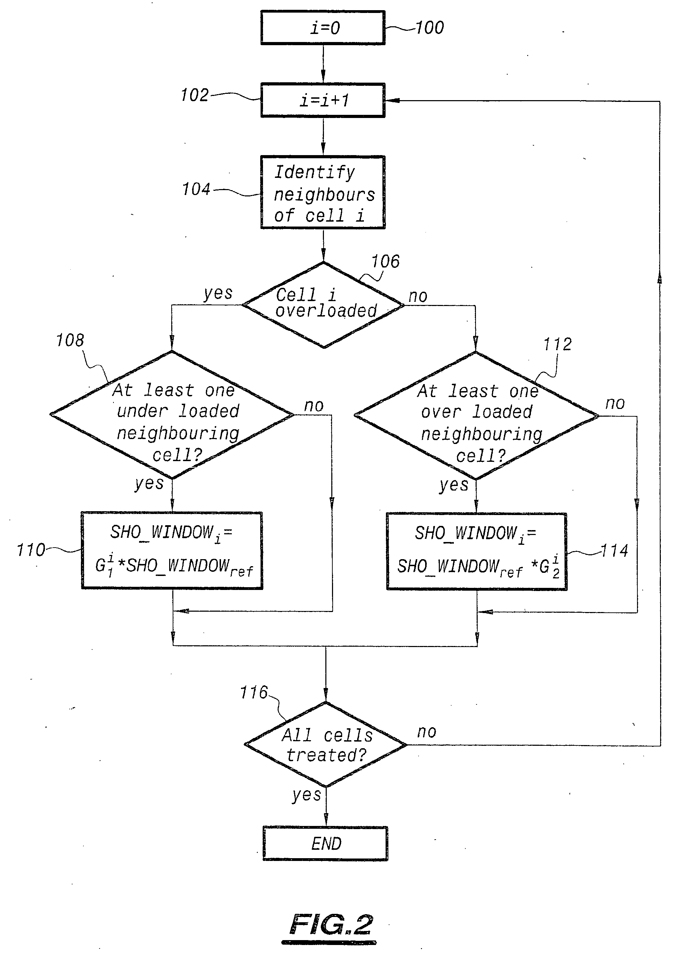

Figure 2 shows an algorithm for iteratively calculating the soft handover windows for all the cells of a cellular network. The algorithm is continuously implemented by the Radio Network Controller (RNC) so that the soft handover window of each cell can continuously change.

At step 100, a counter i is initiated at i = 0. The counter i corresponds to the cells of the networks which are assumed to be numbered from 1 to N.

At step 102, counter i is incremented.

At step 104, the neighbours of cell i are identified. The neighbouring cells are determined as known per se, according to the Ec/No CPICH received by a mobile station [according to the path loss].

The load of cell i is evaluated at step 106. The load is determined by the Radio Network Controller (RNC) based on the number of un-served mobile stations in the cell (for example, base station transmit power could be used as well).

It the cell i is overloaded, it is checked, at step 108, if at least a neighbouring cell is under loaded. If such an under loaded cell is detected, the current soft handover window denoted SHO_WINDOW$_i$ of cell i is set to the value $G_1^i$*SHO_WINDOW$_{ref}$. SHO_WINDOW$_{ref}$ is predetermined reference value given for all the cells.

As an example, $G_1^i$ can be calculated such that, assuming an uniform repartition of the mobile stations, the fraction of the mobile stations located in the cell forced to switch into soft handover equals the last $\dfrac{N_U^i}{N_C^i}$ un-served mobile stations ratio calculated, where $N_C^i$ is the number of mobile stations which are connected to cell i and $N_U^i$ is the number of mobile stations which cannot be served. In that case :

$$G_1^i = \left( \sqrt{1 + \frac{N_U^i}{N_C^i}} \right)^{\alpha} \, .$$

Indeed, the effective size of the soft handover region (zone where neighbouring CPICHs are received within the soft handover window) can be increased proportionally to the un-served mobile station ratio in order to share the overload with the neighbouring cells.

The surface increase of the soft handover region for the i$^{th}$ cell would then be equal to $G_S^i = 1 + \dfrac{N_u^i}{N_c^i}$ or equivalently, introducing the cell radius in the circular cell shape approximation, $G^i{}_s = \dfrac{\pi (G_R^i R_i)^2}{\pi R_i^2} = (G^i{}_R)2$ where $G_R^i$ is the radius increase of the soft handover region to be applied to the cell.

Thus

$$G_R^i \; = \; \sqrt{1 + \frac{N_u^i}{N_c^i}} \, .$$

Assuming a $\alpha^{th}$ power propagation law, the soft handover window gain corresponding to this radius gain equals :

$$G_1^i \; = \; (G_R^i)^{\alpha} \; = \; \left( 1 + \frac{N_u^i}{N_c^i} \right)^{\frac{\alpha}{2}} \, .$$

The use of a time filtering can also be applied on the soft handover window variation to limit abrupt changes that could generate network instability.

If no under loaded cell is detected, no possibility exists for cell i to be assisted by the neighbouring cells and thus, the soft handover window of cell i is not changed.

If cell i is not overloaded, which means that it is normally loaded or that it is underloaded, cell i is expected to be able to assist its neighbouring cells.

It is checked, at step 112, if at least a neighbouring cell is overloaded. If so, the soft handover window of cell is set to the value $G_2^i$*$SHO\_WINDOW_{ref}$, at step 114.

$G_2^i$ is arbitrarily set to a value which highly reduce the soft handover overhead generated by under loaded cells to the overloaded cell.

For example $G_2^i = \dfrac{1}{0,9*SHO\_WINDOWref}$.

If, at step 112, there isn't any overloaded neighbouring cell , the soft handover window of cell i is not modified.

After an eventual change of the soft handover window of cell i, it is checked if other cells have not yet been processed, at step 116. If so, the counter is incremented, at step 102.

The implementation of such a method in a UMTS network can be achieved as follows.

Each mobile station has an active set in which the cells, the base station of which are communicating with the mobile station are listed.

As described in the RRC specification, an active set update procedure is controlled by the UMTS Territorial Radio Access Network (UTRAN).

Each base station transmit a pilot channel CPICH. Each mobile station carries out measurement related to the power of the received CPICH.

More precisely, according to a first embodiment, the downlink $E_c/N_o$ ratio of the received CPICH is measured, $E_c$ being the received energy per chip and No being the spectral noise power density at the receiver.

According to an alternative embodiment, the downlink path loss is measured on the received CPICH.

Based on the measurement results, each mobile station applies triggering criteria to decide if a measurement report should be sent to the UTRAN.

The triggering criteria are defined by the UTRAN and sent to each mobile station.

Intra-frequency reporting events corresponding to the triggering criteria are defined by the UMTS standard. The reporting events are sent by the mobile stations to the UTRAN when a criteria is reached. They are as follows :

- Reporting event 1A : A primary CPICH enters the shoft handover region ;
- Reporting event 1B : A primary CPICH leaves the soft handover region ;
- Reporting event 1C : A non-active primary CPICH becomes better than an active primary CPICH ;
- Reporting event 1D : Change of best cell ;
- Reporting event 1E : A primary CPICH becomes better than an absolute threshold ; and
- Reporting event 1F : A primary CPICH becomes worse than an absolute threshold.

The soft handover window has a significant impact on events 1A, 1B and 1 C, and more precisely the triggering criteria corresponding to these events depend on the soft handover window.

Each mobile station needs to know the soft handover window which is dedicated to each cell.

In addition to the soft handover window which is signalled to each UE, the UTRAN can broadcast the "Cell Individual Offset" denoted CIO which is included in the IE "Cell info" and associated with each measurement object included in the MEASUREMENT CONTROL message.

Thus, the mobile station receives the cell individual offsets CIO for each primary CPICH in the Information Element (IE) "Cell Info".

The offset CIO can be either positive or negative. It is added to the measurement quantity before the mobile station evaluates if an event has occurred.

Assuming that $SHO\_WINDOW_{ref}$ is a fixed soft handover window for a particular event, $SHO\_WINDOW_i = SHO\_WINDOW_{ref} - CIO_i$ is the effective soft handover window for that event dedicated to the cell i, where $CIO_i$ is the Cell Individual Offset for cell i.

Thus, for setting the soft handover window of a cell, the Radio Network Controller - calculates a new CIO taking into account the $SHO\_WINDOW_{ref}$ known by each mobile station and sends this CIO to the mobile station.

Cell Individual Offset is a mandatory default (default value equals 0dB) parameter included in the Cell Info IE (part of Inter-frequency cell and Intra-frequency info list IE's) which is optionally transmitted on the BCH through System Information. It hence implies no extra dedicated signaling as the offset values are broadcasted at cell level.

As a result of the triggering criteria, measurement reports are sent to the UTRAN.

Based on the intra frequency measurement reports provided by the mobile stations (and triggered according to the soft handover window signaled by the UTRAN), the UTRAN, using an internal Radio Ressource Management (RRM) proprietary algorithm decides which cell to add in or to remove from the active set of each mobile station. If necessary, the UTRAN then orders each mobile station to make the following modifications in the active set of the connection by sending an active set update message. The modification can be Radio link addition (Event 1A), Radio link removal (Event 1 B), or Combined radio link addition and removal (Event 1 C).

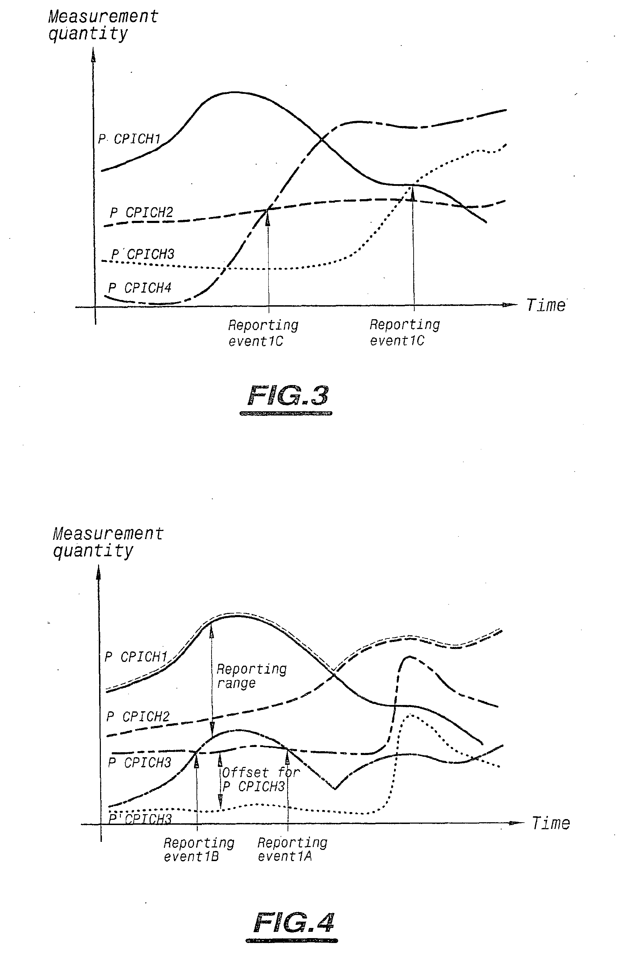

Figure 3 shows an active set management example.

In this example, the parameters hysteresis and time to trigger, as well as the cell individual offsets for all cells are equal to 0. The cells corresponding to primary CPICH 1 and 2 are in the active set (configured to contain two cells only), but the cells transmitting primary CPICH 3 and CPICH 4 are not in the active set at the first time.

The first measurement report (Event 1 C) is sent when primary CPICH 4 becomes better than primary CPICH 2. The "cell measurement event result" of the measurement report contains the information of primary CPICH 4 and CPICH 2.

Assuming that the active set has been updated after the first measurement report, the active set is then primary CPICH 1 and primary CPICH 4. The second measurement report (Event 1 C) is sent when primary CPICH 3 becomes better than primary CPICH 1. The "cell measurement event result" of the second measurement report contains the information of primary CPICH 3 and primary CPICH 1. After receipt of the second measurement report, the active set of the mobile station may be updated to contain primary CPICH 4 and CPICH 3.

In figure 4, an offset CIO is added to primary CPICH 3. Thus, the dotted curve denoted P' CPICH 3 (equivalent to CPICH 3 Ec/No) is used to evaluate if an event occurs instead of the P CPICH 3 curve. Thus, a positive offset is applied to primary CPICH 3 before event evaluation in the mobile station. This means that measurement reports from the mobile station to UTRAN are triggered when primary CPICH plus the corresponding offset, i.e. the dotted curve, leaves and enters the reporting range and when it gets better than primary CPICH 1 (if these events have been ordered by UTRAN). This offset mechanism provides the network with an efficient tool to change the reporting range of an individual primary CPICH measurement.

**Claims**

1. Process for managing the soft handover in a cellular wireless telecommunication system is in which each cell (1, 2, 3, 4, 5, 6, 7) has a base station (11, 12, 13, 14, 15, 16, 17) for communicating with mobile stations (31) which are within the associated cell, and mobile stations (31) which are in soft handover regions of adjacent cells, the soft handover region being defined for each cell with respect to an adjacent cell by a soft handover window value dedicated to the cell, a mobile station in a current cell being in the soft handover region of this cell and connected to the base station of an adjacent cell if the difference between at least a measurement performed on a beacon signal received from the base station of the current cell and at least a measurement performed on a beacon signal received from the base station of the adjacent cell is lower than the soft handover window value, **characterized in that** the process includes a step of setting the soft handover window value of each cell depending on a feature of the cell so that the soft handover window values of the cells are different.

2. Process according to claim 1, **characterized in that** the soft handover window value of each cell is set depending also on the features of the neighbouring cells.

3. Process according to claim 1 or 2, **characterized in that** the setting of the soft handover window value of each cell is dependent at least on the load of the cell.

4. Process according to claim 3, **characterized in that** the soft handover window value of each cell is modified only if at least one neighbouring cell is overloaded or underloaded.

5. Process according to any one of the preceding claims, **characterized in that** the step of setting the soft handover window values is such that for two adjacent cells, the cell having the highest load has the highest soft handover window value.

6. Process according to claim 3, **characterized in that** it includes a step of determining the load of the cell according to the number of un-served mobile stations in the cell.

7. Process according to claims 3, **characterized in that** it includes a step of determining the load of the cell according to the power transmitted by the base station of the cell.

8. Process according to any one of the preceding claims, **characterized in that**, for each cell, the step of setting the soft handover window value is repeatably implemented in time.

9. Process according to any one of the preceding claims, **characterized in that** the soft handover window value of each cell is set by applying a gain ($G_1^i$, $G_2^i$) to a reference soft handover window value.

10. Process according to claim 9, **characterized in that** said gain ($G_1^i$, $G_2^i$) is dependant on said feature of the cell.

11. Process according to any one of the preceding claims, **characterized in that** the wireless telecommunication system is a UMTS system according to 3GPP TS TS 25.331 v5.2.0 (2002-09)Radio Resource Control Protocol Specification, **in that** a reference soft handover window value is dedicated to all cells, and **in that** said step of setting the soft handover window value comprises a step of calculating a cell individual offset (CIO) as defined by the 3GPP specification and a step of broadcasting the cell individual offset (CIO) to the mobile stations through the Cell Info as defined by the 3GPP specification.

12. Process according to any one of the preceding claims, **characterized in that** said at least a measurement performed on a beacon signal is the received Ec/No.

13. Process according to any one of claims 1 - 11, **characterized in that** said at least a measurement performed on a beacon signal is the received path loss.

14. Radio Network Controller (20) for a cellular wireless telecommunication system in which each cell (1, 2, 3, 4, 5, 6, 7) has a base station (11, 12, 13, 14, 15, 16, 17) for communicating with mobile stations (31) which are within the associated cell, and mobile stations (31) which are in soft handover regions of neighboring cells, the soft handover region being defined for each cell with respect to an neighboring cell by a soft handover window value dedicated to the cell, a mobile station in a current cell being in the soft handover region of this cell and connected to the base station of an neighboring cell if the difference between the power received from the base station of the current cell and the power received from the base station of the neighboring cell is lower than the soft handover window value, **characterized in that** it includes means for setting the soft handover window value of each cell depending on a feature of the cell so that the soft handover window values of the cells are different by applying a process according to any one of the preceding claims.

FIG.1A

FIG.1B

FIG.1C

EP 1 499 147 A1

$i=0$ — 100

102 — $i=i+1$

104 — Identify neighbours of cell i

106 — Cell i overloaded

yes / no

108 — At least one under loaded neighbouring cell?

112 — At least one over loaded neighbouring cell?

no / no

yes / yes

110 — $SHO\_WINDOW_i = G_1^i * SHO\_WINDOW_{ref}$

114 — $SHO\_WINDOW_i = SHO\_WINDOW_{ref} * G_2^i$

116 — All cells treated?

no

yes

END

*FIG.2*

Measurement
quantity

P CPICH1

P CPICH2

P CPICH3

P CPICH4

Time

Reporting
event1C

Reporting
event1C

**FIG.3**

Measurement
quantity

P CPICH1

Reporting
range

P CPICH2

P CPICH3

Offset for
P CPICH3

P CPICH3

Time

Reporting
event1B

Reporting
event1A

**FIG.4**

10

EP 1 499 147 A1

| | European Patent Office | EUROPEAN SEARCH REPORT | Application Number EP 03 29 1779 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 117 269 A (ERICSSON TELEFON AB L M) 18 July 2001 (2001-07-18) * abstract * * figures 1,4,6 * * paragraph [0003] - paragraph [0006] * * paragraph [0010] - paragraph [0013] * * paragraph [0018] - paragraph [0022] * * paragraph [0029] - paragraph [0032] * * paragraph [0043] - paragraph [0045] * * paragraph [0049] - paragraph [0057] * --- | 1-14 | H04Q7/38 |
| A | WO 02 082843 A (SCHWARZ UWE ;NOKIA CORP (FI); SIPILAE KARI (FI)) 17 October 2002 (2002-10-17) * abstract * * figures 1,2 * * page 1, line 1 - line 32 * * page 3, line 21 - page 5, line 18 * --- | 2,4,6 | |
| A | ETSI: "TS 125 331 Universal Mobile Telecommunications System (UMTS);RRC Protocol Specification (3G TS 25.331 Version 3.1.0 Release 1999)" ETSI TS 125 331 V3.1.0, XX, XX, January 2000 (2000-01), pages 1-282, XP002165164 * page 78, paragraph 8.3.4 - paragraph 8.3.4.5 * * page 84, paragraph 8.4 * * page 232, paragraph 10.2.7.13 - paragraph 10.2.7.17 * * page 255, paragraph 14.1.1 - paragraph 14.1.5 * ----- | 1,11-14 | TECHNICAL FIELDS SEARCHED (Int.Cl.7) H04Q |

The present search report has been drawn up for all claims

| Place of search MUNICH | Date of completion of the search 30 October 2003 | Examiner MOHAMMADIAN SAN.., D |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 03 29 1779

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2003

| Patent document cited in search report | | | Publication date | Patent family member(s) | | Publication date |
|---|---|---|---|---|---|---|
| EP 1117269 | A | | 18-07-2001 | EP 1117269 A1 | | 18-07-2001 |
| | | | | AU 3155401 A | | 24-07-2001 |
| | | | | WO 0152582 A1 | | 19-07-2001 |
| | | | | EP 1254576 A1 | | 06-11-2002 |
| | | | | TW 494699 B | | 11-07-2002 |
| | | | | US 2002019231 A1 | | 14-02-2002 |
| WO 02082843 | A | | 17-10-2002 | WO 02082843 A1 | | 17-10-2002 |

EPO FORM P0459

For more details about this annex : see Official Journal of the European Patent Office, No. 12/82